# EUROPÄISCHE PATENTSCHRIFT

(11) **EP 2 067 544 B1**
(45) Veröffentlichungstag und Bekanntmachung des Hinweises auf die Patenterteilung: **09.09.2009**
(21) Anmeldenummer: 07023628.6
(22) Anmeldetag: 06.12.2007
(51) Int. Cl.: B21D 28/04, B21D 43/02, B26D 5/20, G05B 19/18

(54) **Verfahren und Werkzeugmaschine zum Bearbeiten von Werkstücken**
Machine tool and method for machining workpieces
Procédé et machine-outil destinés au traitement de pièces à usiner

(43) Veröffentlichungstag der Anmeldung: 10.06.2009
(73) Patentinhaber: TRUMPF Werkzeugmaschinen GmbH + Co. KG, 71254 Ditzingen (DE)
(72) Erfinder: Bressler, Ulrich, 71254 Ditzingen (DE); Demel, Peter, 70597 Stuttgart (DE); Krutzke, Michael, 71272 Renningen (DE)
(74) Vertreter: Kohler Schmid Möbus

(56) Entgegenhaltungen:
- EP-A- 0 778 092
- DE-A1- 3 720 412
- DE-C2- 3 745 067
- GB-A- 2 309 001
- US-A- 5 435 216

## Beschreibung

Die Erfindung betrifft ein Verfahren zum Bearbeiten, insbesondere zum Schneiden und/oder zum Umformen, von vorzugsweise plattenartigen Werkstücken, beispielsweise von Blechen, wobei ein Werkstück und ein Bearbeitungswerkzeug relativ zueinander mit einer Positionierbewegung, einer Hinhubbewegung und einer Rückhubbewegung bewegt werden, wobei das Werkstück und das Bearbeitungswerkzeug
- bei der Positionierbewegung relativ zueinander in einer Positionierrichtung zugestellt werden,
- bei der Rückhubbewegung relativ zueinander in einer Rückhubrichtung quer zu der Positionierrichtung voneinander weg bewegt werden und
- bei der Hinhubbewegung relativ zueinander in einer Hinhubrichtung quer zu der Positionierrichtung zueinander hin bewegt werden,
und wobei die Rückhubbewegung und die Hinhubbewegung während der Positionierbewegung ausgeführt werden. Die Erfindung betrifft weiterhin eine Werkzeugmaschine zum Bearbeiten von Werkstücken der vorstehend genannten Art.

Ein gattungsgemäßes Verfahren und eine gattungsgemäße Werkzeugmaschine sind aus der US 5,435,216 A bekannt. Im Falle des Standes der Technik wird ein Werkstück auf einer Revolverstanzpresse nacheinander an verschiedenen Stellen bearbeitet. Zu diesem Zweck wird eine erste zu bearbeitende Stelle des Werkstücks von einer Bewegungseinrichtung mit einer Positionierbewegung unter einem Stanzstempel angeordnet. Noch bevor die Positionierbewegung des Werkstücks abgeschlossen ist, wird der Stanzstempel mittels eines hydraulischen Hubantriebs mit einer Hinhubbewegung zu dem Werkstück hin bewegt.

Der Zeitpunkt, zu welchem die Hinhubbewegung des Stanzstempels vor Abschluss der Positionierbewegung des Werkstücks eingeleitet wird, ist derart gewählt, dass der Stanzstempel bei Abschluss der Positionierbewegung eine werkstücknahe Position erreicht. In dieser Position ist die Unterseite des Stanzstempels auf Höhe der Werkstückoberseite angeordnet. Ausgehend von der werkstücknahen Position wird die Hinhubbewegung mit einem Arbeitshub fortgesetzt, bei welchem unter Zusammenwirken des Stanzstempels und einer auf der gegenüberliegenden Seite des Werkstücks angeordneten Stanzmatrize eine Ausstanzung an dem Werkstück erstellt wird.

Anschließend wird der Stanzstempel mit einer Rückhubbewegung von dem Werkstück weg bewegt. In einem ersten Abschnitt der Rückhubbewegung wird der Stanzstempel in die werkstücknahe Position zurückbewegt (Arbeitsrückhub). Bei dem Arbeitshub und bei dem Arbeitsrückhub des Stanzstempels wird das Werkstück durch die Bewegungseinrichtung nicht bewegt. Sobald der Arbeitsrückhub des Stanzstempels beendet ist, folgt eine erneute Positionierbewegung des Werkstücks, um die nächste Bearbeitungsstelle unter dem Stanzstempel anzuordnen. Während der Positionierbewegung des Werkstücks wird die Rückhubbewegung fortgesetzt und der Stanzstempel von dem Werkstück weg in eine werkstückferne Umkehrposition überführt. Vor Abschluss der Positionierbewegung setzt dann wieder eine Hinhubbewegung des Stanzstempels ein.

In der Praxis wird die Einleitung der Hinhubbewegung des Stanzstempels vor Abschluss der Werkstück-Positionierbewegung auch als Hubvorauslösung bezeichnet.

Den Zeitpunkt der Hubvorauslösung bestimmt die Steuereinheit der vorbekannten Stanzmaschine als denjenigen Zeitpunkt, zu welchem die Begrenzung eines Zielbereichs, welcher um die zu bearbeitende Stelle des Werkstücks definiert wird, unter den Stanzstempel gelangt. Die Größe des Zielbereichs muss vorab ermittelt und in der Steuereinheit hinterlegt werden.

Aufgabe der vorliegenden Erfindung ist es, ein Verfahren und eine Werkzeugmaschine verfügbar zu machen, die ein Bearbeiten von Werkstücken mit geringem Programmierungsaufwand gestattet.

Diese Aufgabe wird durch die Gegenstände der Patentansprüche 1 und 17 gelöst.

Die Erfindung zeichnet sich dadurch aus, dass Vorgaben für die Steuerung der Hinhubbewegung des Bearbeitungswerkzeugs, beispielsweise der Zeitpunkt, zu welchem die Hinhubbewegung eingeleitet wird, im Prozess ermittelt werden. Eine Vorabermittlung und eine Hinterlegung von derartigen Steuerungsvorgaben in der Steuereinheit können entfallen. Dabei nutzt die Erfindung die Erkenntnis, dass die sich bei der Rückhubbewegung ergebenden Verhältnisse Rückschlüsse auf die Verhältnisse bei der Hinhubbewegung zulassen. Insbesondere entspricht in vielen Fällen die Beziehung zwischen Rückhubfortschritt und sich gleichzeitig ergebendem Positionierfortschritt weitgehend der Beziehung zwischen Hinhubfortschritt und sich gleichzeitig ergebendem Positionierfortschritt, so dass durch eine Ermittlung der einen Beziehung auf die andere geschlossen werden kann.

Zum Beispiel beeinflusst die Leistungsfähigkeit der Werkzeug- und Werkstückantriebe in besonderem Maße die Steuerung der Hinhubbewegung. Die Leistungsfähigkeit der genannten Antriebe hat in entsprechender Weise einen Einfluss auf die sich ergebende Beziehung zwischen Rückhubfortschritt und Positionierfortschritt. Erfindungsgemäß wird die Beziehung zwischen Rückhubfortschritt und Positionierfortschritt in Form eines relativen Rückhubfortschritts ermittelt und die Hinhubbewegung in Abhängigkeit von dem relativen Rückhubfortschritt gesteuert. Auf diese Weise kann unmittelbar im Prozess beispielsweise die Leistungsfähigkeit der Antriebe bei der Steuerung der Hinhubbewegung berücksichtigt werden. Eine Vorabermittlung möglicher Einflüsse der Leistungsfähigkeit der Antriebe erübrigt sich somit.

Vorteilhaft ist zudem, dass das erfindungsgemäße Verfahren und die erfindungsgemäße Werkzeugmaschine flexibel auf Veränderungen, wie Schwankungen der Leistungsfähigkeit der Antriebe, reagieren und eine Anpassung der Hinhubbewegung vornehmen können. Derartige Veränderungen wirken sich auch auf die Beziehung von Positionierbewegung und Rückhubbewegung und folglich auf den ermittelten relativen Rückhubfortschritt aus. Da im Falle der Erfindung der relative Rückhubfortschritt bei der Steuerung der Hinhubbewegung berücksichtigt wird, können auf diesem Wege die maschinenseitigen Veränderungen auch bei der Steuerung der Hinhubbewegung berücksichtigt werden. Insofern erfolgt bei jeder Positionierbewegung eine automatische Anpassung der Steuerung der Hinhubbewegung an die tatsächlichen Verhältnisse.

Besondere Ausführungsarten der Erfindung nach Patentanspruch 1 ergeben sich aus den abhängigen Patentansprüchen 2 bis 16.

Gemäß Patentanspruch 2 wird die Rückhubbewegung frühestens gleichzeitig mit der Positionierbewegung eingeleitet und gemäß Patentanspruch 3 die Hinhubbewegung spätestens gleichzeitig mit der Positionierbewegung abgeschlossen. Damit werden Verzögerungen der Werkstückbearbeitung durch die Rückhubbewegung und die Hinhubbewegung vermieden. Wenn die Rückhubbewegung gleichzeitig mit der Positionierbewegung eingeleitet wird und die Hinhubbewegung gleichzeitig mit der Positionierbewegung abgeschlossen ist, wird die Dauer der Positionierbewegung für die Hubbewegungen genutzt. Dies ist besonders für den Fall vorteilhaft, dass der Abstand zwischen dem Bearbeitungswerkzeug und dem Werkstück quer zur Positionierrichtung während der Positionierbewegung möglichst lange Zeit möglichst groß sein sollte.

Bei einer bevorzugten Ausgestaltung der Erfindung nach Patentanspruch 4 wird die Hinhubbewegung in Abhängigkeit von dem relativen Rückhubfortschritt eingeleitet. Der Zeitpunkt der Einleitung der Hinhubbewegung bestimmt maßgeblich, ob die Hinhubbewegung rechtzeitig vor Abschluss der Positionierbewegung beendet ist. Dies trifft vor allem dann zu, wenn die gesamte Hinhubbewegung in möglichst kurzer Zeit erfolgt, d. h. die Maschinenantriebe bei der Hinhubbewegung mit ihrer maximalen Leistungsfähigkeit betrieben werden und folglich die Steuerung der Hinhubbewegung maßgeblich durch die maximale Leistungsfähigkeit der Antriebe bestimmt wird. In Abhängigkeit von dem relativen Rückhubfortschritt ermittelt die Steuereinheit dann nur noch den "richtigen" Startzeitpunkt für die Hinhubbewegung. Folglich ergeben sich einfache steuerungstechnische Verhältnisse.

Für den bereits geschilderten Fall, dass das Bearbeitungswerkzeug und das Werkstück zu jedem Zeitpunkt der Positionierbewegung möglichst weit voneinander beabstandet sein sollten, wird der "richtige" Zeitpunkt zur Einleitung der Hinhubbewegung nicht nur dadurch bestimmt, dass die Hinhubbewegung rechtzeitig abschlossen sein sollte, sondern zudem dadurch, dass die Hinhubbewegung möglichst spät eingeleitet werden sollte. Die Ausgestaltung der Erfindung nach Patentanspruch 4 ermöglicht auch die Ermittlung des "richtigen" Startzeitpunkts in diesem Fall mit einfachen steuerungstechnischen Mitteln.

Patentanspruch 5 betrifft eine vorteilhafte Ausführungsart der Erfindung, bei welcher die Rückhubbewegung in Abhängigkeit von dem relativen Rückhubfortschritt gesteuert wird. Dies ermöglicht schon bei der Rückhubbewegung und damit sehr frühzeitig ein Eingreifen der Steuereinheit in den Bewegungsablauf des Bearbeitungswerkzeugs. Insbesondere wenn die Rückhubbewegung "vorzeitig" abgebremst wird, kann die Ausgangsposition für die Hinhubbewegung vorausschauend neu definiert werden.

Im Falle des erfindungsgemäßen Verfahrens nach Patentanspruch 6 ist in einfacher Weise sichergestellt, dass die Rückhubbewegung und die Hinhubbewegung mit Abschluss der Positionierbewegung beendet sind.

Gemäß Patentanspruch 7 wird die Hinhubbewegung in Abhängigkeit von dem relativen Rückhubfortschritt aus verschiedenen in Hinhubrichtung eingenommenen Relativpositionen des Bearbeitungswerkzeugs und des Werkstücks eingeleitet. Indem die werkstückferne Ausgangposition der Hinhubbewegung nicht unveränderbar vordefiniert ist, sondern im Prozess (neu) definiert werden kann, ergibt sich ein erfindungsgemäßes Verfahren mit hoher Anpassungsfähigkeit an die sich jeweils ergebenden Verhältnisse.

Ausweislich Patentanspruch 8 wird bei einem erfindungsgemäßen Verfahren der Fortschritt der Positionierbewegung in Form einer normierten Verfahrstrecke ermittelt, welche als Anteil des bei der Ermittlung bereits zurückgelegten Anteils an einer Gesamtpositionierstrecke der Positionierbewegung definiert ist. Vorteilhafterweise können somit die Steuerungsbedingungen sowie gegebenenfalls vorbestimmte Werte für den Fortschritt der Positionierbewegung in allgemeiner Form für jede Positionierbewegung unabhängig von der jeweiligen absoluten Gesamtpositionierstrecke der Positionierbewegung in der Steuereinheit hinterlegt werden.

Durch einfache steuerungstechnische Verhältnisse zeichnet sich auch die Ausführungsart der Erfindung nach Patentanspruch 9 aus, bei welcher die Ermittlung des relativen Rückhubfortschritts bei einem vorbestimmten Fortschritt der Positionierbewegung und/oder bei einem vorbestimmten Fortschritt der Rückhubbewegung erfolgt.

Ein bevorzugter Wert für einen vorbestimmten Fortschritt der Rückhubbewegung stellt nach Patentanspruch 10 derjenige Fortschritt der Rückhubbewegung dar, welcher mit Abschluss der maximal möglichen Rückhubbewegung erreicht wird. Die Auswahl dieses Rückhubfortschritts beruht auf der Annahme, dass die Hinhubbewegung ausgehend von der Endposition der maximal möglichen Rückhubbewegung genauso lange dauert wie die vorausgegangene Rückhubbewegung.

Ein bevorzugter Wert für einen vorbestimmten Fortschritt der Positionierbewegung ist nach Patentanspruch 11 bei einen Viertel der Gesamtpositionierstrecke erreicht. Aus dem Fortschritt der Rückhubbewegung bei Erreichen eines Viertels der Gesamtpositionierstrecke lässt sich auf die Endposition der Rückhubbewegung bei Erreichen der Hälfte der Gesamtpositionierstrecke schließen.

Die Patentansprüche 12 und 13 betreffen Ausführungsarten der Erfindung, welche sich ebenfalls durch einen einfachen Steuerungsaufbau auszeichnen. In einfacher Weise erfolgt die Steuerung der Hinhubbewegung in Abhängigkeit von dem relativen Rückhubfortschritt anhand eines auf Grundlage des relativen Rückhubfortschritts ermittelten Fortschritts der Positionierbewegung.

Gleiches gilt für das erfindungsgemäße Verfahren nach Patentanspruch 14 im Hinblick auf die Steuerung der Rückhubbewegung. Diese Steuerung erfolgt in Abhängigkeit von dem relativen Rückhubfortschritt anhand eines auf Grundlage des relativen Rückhubfortschritts ermittelten Fortschritts der Rückhubbewegung.

Wird bei der Rückhubbewegung und bei der Hinhubbewegung das Bearbeitungswerkzeug bewegt, so ergibt sich eine für die Praxis besonders vorteilhafte Ausführungsart der Erfindung (Patentanspruch 15).

Ausweislich Patentanspruch 16 wird bei der Rückhubbewegung und bei der Hinhubbewegung ein Bearbeitungswerkzeug bewegt, welches bei der vorhergehenden oder nachfolgenden Werkstückbearbeitung nicht bewegt wird (passives Bearbeitungswerkzeug). Die Rückhubbewegung und die Hinhubbewegung des passiven Bearbeitungswerkzeugs dienen in diesem Fall der Vermeidung von Kollisionen zwischen dem passiven Bearbeitungswerkzeug und dem Werkstück. Insbesondere kann ein Verkratzen des Werkstücks durch das passive Bearbeitungswerkzeug bei der Positionierbewegung wirkungsvoll verhindert werden.

Nachstehend wird die Erfindung anhand schematischer Darstellungen von Ausführungsbeispielen näher erläutert. Es zeigen:
- **Fig. 1:**: eine Stanz-Umformmaschine zum Bearbeiten von Blechen,
- **Fig. 2:**: den Ablauf einer Werkstückbearbeitung mit einer Positionierbewegung, einer Rückhubbewegung und einer Hinhubbewegung,
- **Fig. 3:**: Relativpositionen eines Bearbeitungswerkzeugs und eines Werkstücks entlang der Z-Achse aus Figur 1 als Funktion der normierten Verfahrstrecke s bei einer ersten Positionierbewegung und
- **Fig. 4:**: Relativpositionen eines Bearbeitungswerkzeugs und eines Werkstücks entlang der Z-Achse aus Figur 1 als Funktion der normierten Verfahrstrecke s bei einer zweiten Positionierbewegung.

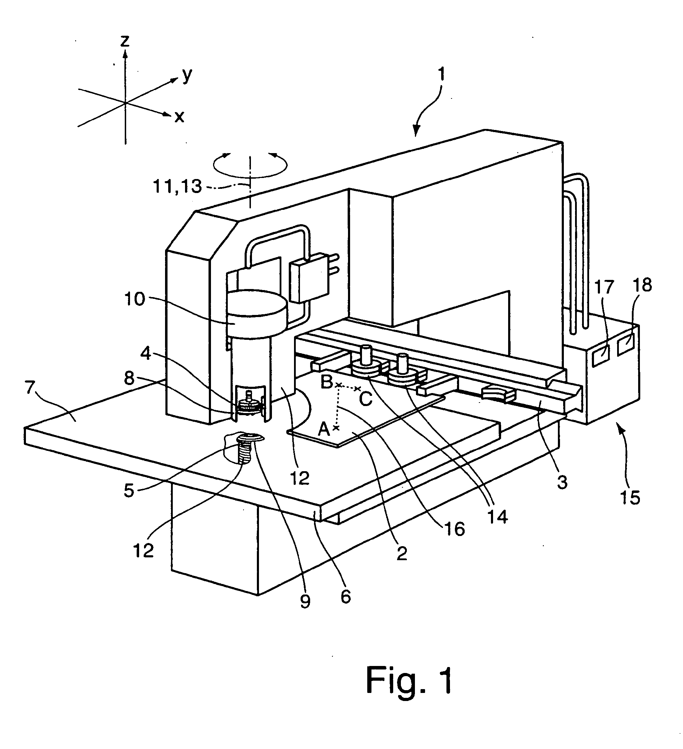

Figur 1 zeigt eine Werkzeugmaschine zum Schneiden und/oder zum Umformen von Blechen in Form einer Stanz-Umformmaschine 1. Ein zu bearbeitendes Blech 2 wird mittels einer als Koordinatenführung 3 ausgebildeten Positioniereinrichtung zwischen Bearbeitungswerkzeugen, im Einzelnen zwischen einem Oberwerkzeug 4 und einem Unterwerkzeug 5 der Stanz-Umformmaschine 1 in einer horizontalen Ebene positioniert. Die horizontale Positionierebene verläuft parallel zu der X/Y-Ebene des in Figur 1 gezeigten Koordinatensystems und wird durch einen Werkstücktisch 6 definiert, der eine horizontal verlaufende Werkstückauflagefläche 7 für die Werkstückunterseite bildet.

Das Oberwerkzeug 4 und das Unterwerkzeug 5 sind in maschinenseitigen Werkzeugaufnahmen 8 und 9 festgelegt. Die obere Werkzeugaufnahme 8 und damit auch das darin gelagerte Oberwerkzeug 4 sind mittels eines oberen Hubantriebs 10 entlang einer Hubachse 11 heb- und senkbar, welche parallel zu der Z-Achse des in Figur 1 eingezeichneten Koordinatensystems verläuft.

In vergleichbarer Weise dient ein unterer, in Figur 1 teilweise verdeckter Hubantrieb 12 dazu, die untere Werkzeugaufnahme 9 und das darin gehaltene Unterwerkzeug 5 entlang der Hubachse 11 anzuheben und abzusenken.

Beide Werkzeugaufnahmen 8, 9 sind weiterhin mittels in Figur 1 nicht dargestellter Werkzeugdrehantriebe um eine mit der Hubachse 11 identische Werkzeugdrehachse 13 dreheinstellbar. Durch die Werkzeugdrehantriebe werden die Bearbeitungswerkzeuge 4, 5 je nach Bearbeitungsaufgabe um die Werkzeugdrehachse 13 in unterschiedliche Drehstellungen überführt.

An der Koordinatenführung 3 ist ein Linearmagazin mit weiteren Bearbeitungswerkzeugen 14 vorgesehen, welche bei Bedarf für das Oberwerkzeug 4 und das Unterwerkzeug 5 eingewechselt werden können.

Sämtliche Antriebe der Stanz-Umformmaschine 1 werden durch eine als Steuereinrichtung dienende numerische Steuereinheit 15 gesteuert. Details der numerischen Steuereinheit 15 werden nachstehend anhand der Bewegungsabläufe bei einer Werkstückbearbeitung erläutert.

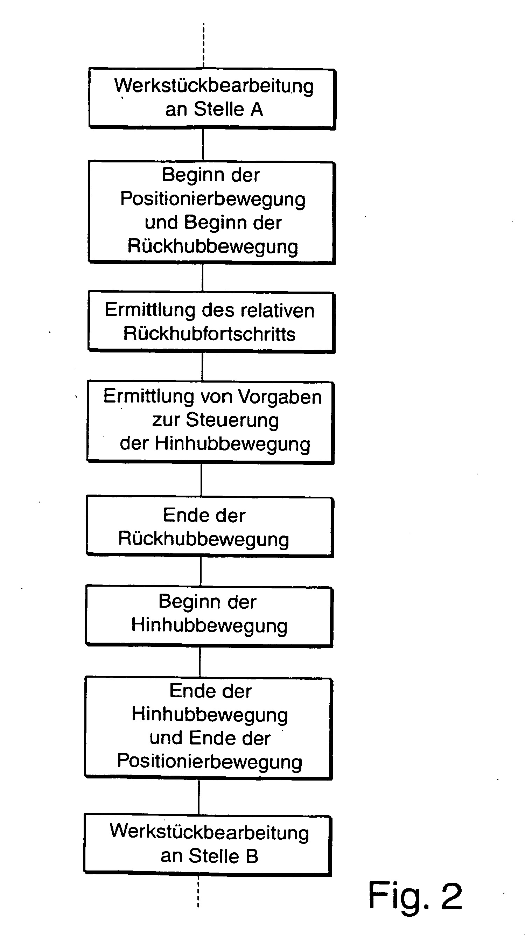

Figur 2 zeigt einen beispielhaften Ablauf einer Werkstückbearbeitung auf der Stanz-Umformmaschine 1 gemäß Figur 1. Zu Beginn der Werkstückbearbeitung ist das Blech 2 derart positioniert, dass eine zu bearbeitende Stelle A des Blechs 2 zwischen den Bearbeitungswerkzeugen 4, 5 angeordnet ist. In dieser Stellung wird das Blech 2 an der Stelle A mittels des Oberwerkzeugs 4 und des Unterwerkzeugs 5 bearbeitet.

Bei der Bearbeitung ist das Unterwerkzeug 5 in einer werkstücknahen Referenzposition angeordnet, bei welcher die Oberseite des Unterwerkzeugs 5 mit der durch den Werkstücktisch 6 gebildeten Werkstückauflagefläche 7 fluchtet. Die Werkstückbearbeitung erfolgt, indem das Oberwerkzeug 4 mittels des oberen Hubantriebs 10 entlang der Hubachse 11 zu dem feststehenden Unterwerkzeug 5 hin bewegt wird. Anschließend wird das Oberwerkzeug 4 entlang der Hubachse 11 angehoben. Das Unterwerkzeug 5 wird demnach bei der Bearbeitung nicht bewegt.

Nach der Bearbeitung an der Stelle A wird das Blech 2 mittels der Koordinatenführung 3 mit einer Positionierbewegung gegenüber dem Oberwerkzeug 4 und dem Unterwerkzeug 5 bewegt. Beispielhaft ist in Figur 1 eine zweite Stelle B des Blechs 2 gezeigt, welche bei der Positionierbewegung zwischen die Bearbeitungswerkzeuge 4, 5 gelangt. Das Blech 2 wird hierzu entlang einer in Figur 1 gestrichelt dargestellten Gesamtpositionierstrecke 16 verschoben.

Um bei der Positionierbewegung ein Verkratzen der Blechunterseite durch das Unterwerkzeug 5 zu vermeiden, wird das Unterwerkzeug 5 ausgehend von der werkstücknahen Referenzposition gegenüber dem Blech 2 abgesenkt. Die zu diesem Zweck ausgeführte Rückhubbewegung des Unterwerkzeugs 5 erfolgt in einer Rückhubrichtung, welche entlang der Hubachse 11 und damit quer zu der Richtung der Positionierbewegung verläuft. Mit Abschluss der Rückhubbewegung nimmt das Unterwerkzeug 5 eine werkstückferne Endposition ein.

Noch während der Positionierbewegung des Blechs 2 und vor einer Werkstückbearbeitung an der Stelle B des Blechs 2, wird das Unterwerkzeug 5 ausgehend von der werkstückfernen Endposition mit einer Hinhubbewegung entlang der Hubachse 11 in Richtung auf die werkstücknahe Referenzposition zurückbewegt.

Die Koordinatenführung 3 und der untere Hubantrieb 12 werden mittels der numerischen Steuereinheit 15 derart gesteuert, dass die Rückhubbewegung des Unterwerkzeugs 5 frühestens gleichzeitig mit der Positionierbewegung des Blechs 2 eingeleitet wird und dass die Hinhubbewegung des Unterwerkzeugs 5 spätestens gleichzeitig mit der Positionierbewegung des Blechs 2 abgeschlossen ist.

Bevorzugterweise wird die Rückhubbewegung des Unterwerkzeugs 5 gleichzeitig mit der Positionierbewegung der Blechs 2 eingeleitet und die Hinhubbewegung des Unterwerkzeugs 5 gleichzeitig mit der Positionierbewegung des Blechs 2 abgeschlossen. Das Unterwerkzeug 5 ist folglich während der gesamten Positionierbewegung des Blechs 2 möglichst weit von der Blechunterseite entfernt.

Während der Positionierbewegung des Blechs 2 ermittelt eine Fortschrittsermittlungseinheit 17 der numerischen Steuereinheit 15 den Fortschritt der Rückhubbewegung des Unterwerkzeugs 5 und den Fortschritt der Positionierbewegung des Blechs 2. Der ermittelte Fortschritt der Rückhubbewegung und der sich gleichzeitig ergebende Fortschritt der Positionierbewegung werden durch eine Auswerteeinheit 18 der Steuereinheit 15 zueinander in Beziehung gesetzt. Dadurch wird der Fortschritt der Rückhubbewegung in Abhängigkeit von dem Fortschritt der Positionierbewegung (relativer Rückhubfortschritt) bestimmt.

Auf Grundlage des so ermittelten relativen Rückhubfortschritts bestimmt die Auswerteeinheit 18 Vorgaben für die Steuerung der auf den Rückhub folgenden Hinhubbewegung, beispielsweise eine Startbedingung für die Hinhubbewegung, des Unterwerkzeugs 5. Durch die Steuereinheit 15 wird dann die Hinhubbewegung des Unterwerkzeugs 5 gemäß diesen Vorgaben gesteuert. Demzufolge wird die Hinhubbewegung des Unterwerkzeugs 5 in Abhängigkeit von dem relativen Rückhubfortschritt, d. h. in Abhängigkeit von der sich ergebenden Beziehung zwischen dem Rückhubfortschritt und dem Positionierfortschritt gesteuert.

Basierend auf einem numerischen Bearbeitungsprogramm erzeugt die numerische Steuereinheit 15 in sehr kurzen aufeinander folgenden Taktzeiten Lage-Sollwerte für die zur Bewegung von Oberwerkzeug 4, Unterwerkzeug 5 und Blech 2 genutzten Antriebe der Stanz-Umformmaschine 1. Diese Antriebe der Stanz-Umformmaschine 1 sind derart ausgelegt, dass sie die vorgegebenen Lage-Sollwerte ohne wesentliche Abweichungen zeitnah erreichen können. Demzufolge stimmen die vorgegebenen Lage-Sollwerte weitgehend mit den tatsächlichen Lage-Istwerten überein.

Unter anderem werden die Lage-Sollwerte vorgegeben für die Koordinatenführung 3 sowie den unteren Hubantrieb 12. Mittels dieser Antriebe werden die Positionierbewegung des Blechs 2 sowie die Rückhubbewegung und die Hinhubbewegung des Unterwerkzeugs 5 ausgeführt.

Die Fortschrittsermittlungseinheit 17 der Steuereinheit 15 berechnet anhand der Lage-Sollwerte, welche der Koordinatenführung 3 durch die Steuereinheit 15 für die Positionierbewegung vorgegeben werden, den Fortschritt der Positionierbewegung. Hierzu wird aus einem dem Zeitpunkt der Fortschrittsermittlung zugeordneten Lage-Sollwert für die Koordinatenführung 3 die von dem Blech 2 seit Beginn der Positionierbewegung zurückgelegte Strecke bestimmt. Daraus wird wiederum der Fortschritt der Positionierbewegung in Form des bei der Ermittlung zurückgelegten Anteils an der Gesamtpositionierstrecke der Positionierbewegung berechnet. Der so ermittelte Fortschritt der Positionierbewegung wird auch als normierte Verfahrstrecke bezeichnet.

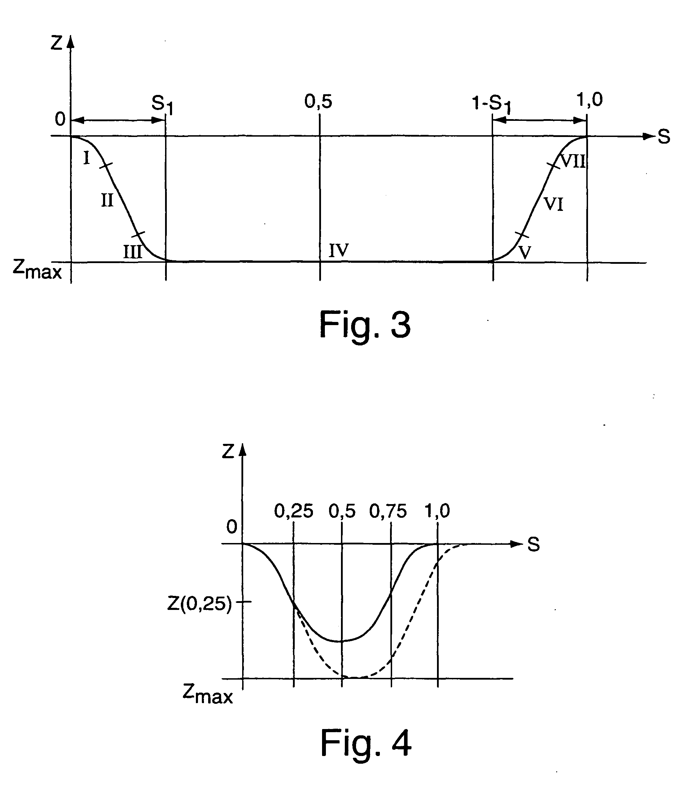

Beispielsweise ist bei einem Fortschritt der Positionierbewegung bzw. bei einer normierten Verfahrstrecke von s = 0,5 die Hälfte der Gesamtpositionierstrecke zurückgelegt. Bei einem Fortschritt der Positionierbewegung bzw. bei einer normierten Verfahrstrecke von s = 1,0 ist die Gesamtpositionierstrecke vollständig zurückgelegt, die Positionierbewegung ist folglich abgeschlossen (vgl. Figuren 3, 4).

Der Fortschritt der Rückhubbewegung des Unterwerkzeugs 5 wird durch die Fortschrittsermittlungseinheit 17 anhand des für den Zeitpunkt der Ermittlung durch die Steuereinheit 15 vorgegebenen Lage-Sollwerts für den unteren Hubantrieb 12 berechnet. Aus diesem Lage-Sollwert ermittelt die Fortschrittsermittlungseinheit 17 dann den Rückhubfortschritt in Form der momentanen Position des Unterwerkzeugs 5 entlang der Hubachse 12 gegenüber der Referenzposition des Unterwerkzeugs 5, also gegenüber derjenigen Position des Unterwerkzeugs 5, bei welcher die Oberseite des Unterwerkzeugs 5 mit der Werkstückauflagefläche 7 fluchtet.

Bei einem Fortschritt der Rückhubbewegung von z = 0 nimmt das Unterwerkzeug 5 demnach die Referenzposition ein. Bei einem Fortschritt von z = zₘₐₓ hat das Unterwerkzeug 5 die maximal mögliche Rückhubbewegung ausgeführt. Die maximal mögliche Rückhubbewegung endet bei einer konstruktiv vorgegebenen unteren Endposition.

Die Figuren 3 und 4 zeigen den Fortschritt der Rückhubbewegung des Unterwerkzeugs 5 bezogen auf den sich gleichzeitig ergebenden Fortschritt der Positionierbewegung am Beispiel von zwei verschiedenartigen Positionierbewegungen bei einer Werkstückbearbeitung, welche gemäß Figur 2 abläuft. Der Fortschritt der Rückhubbewegung ist als Funktion des sich gleichzeitig ergebenden Fortschritts der Positionierbewegung dargestellt.

Die Figuren 3 und 4 zeigen demnach jeweils den Verlauf des relativen Rückhubfortschritts. In entsprechender Weise ist der Fortschritt der auf den Rückhub folgenden Hinhubbewegung dargestellt (relativer Hinhubfortschritt).

Im Falle der in Figur 3 veranschaulichten Positionierbewegung handelt es sich um eine "lange" Positionierbewegung, während derer das Unterwerkzeug 5 eine konstruktiv vorgegebene maximal mögliche Rückhubbewegung (z = zₘₐₓ) ausführt und das Unterwerkzeug 5 sogar einige Zeit in der unteren Endposition verweilt, bevor die Hinhubbewegung des Unterwerkzeugs 5 eingeleitet wird. Derartige Verhältnisse ergeben sich beispielsweise dann, wenn in Figur 1 nach der Stelle A die Stelle B des Blechs 2 zwischen das Oberwerkzeug 4 und das Unterwerkzeug 5 bewegt wird.

Mittels der Steuereinheit 15 wird das Unterwerkzeugs 5 während der Positionierbewegung derart gesteuert, dass sich für die Bewegung des Unterwerkzeugs 5 sieben verschiedene Bewegungsabschnitte I bis VII ergeben, deren Einteilung Figur 3 zu entnehmen ist. Die Rückhubbewegung des Unterwerkzeugs 5 umfasst die Bewegungsabschnitte I bis III. Die Hinhubbewegung des Unterwerkzeugs 5 umfasst die Bewegungsabschnitte V bis VII. Während des Bewegungsabschnitts IV ist das Unterwerkzeug 5 gegenüber der Unterseite des Blechs 2 maximal zurückgezogen.

Während des ersten Bewegungsabschnitts I wird das Unterwerkzeug 5 in Rückhubrichtung beschleunigt. Während des zweiten Bewegungsabschnitts II bewegt sich das Unterwerkzeug 5 mit konstanter Geschwindigkeit in Rückhubrichtung. Vor Erreichen der unteren Endposition wird das Unterwerkzeug 5 dann während des Bewegungsabschnitts III abgebremst und verweilt anschließend während des Bewegungsabschnitts IV in der unteren Endposition.

Die Hinhubbewegung umfasst wiederum einen ersten Bewegungsabschnitt, während dessen das Unterwerkzeug 5 in Hinhubrichtung beschleunigt wird (Bewegungsabschnitt V), einen Bewegungsabschnitt, während dessen das Unterwerkzeug 5 mit konstanter Geschwindigkeit in Hinhubrichtung bewegt wird (Bewegungsabschnitt VI) sowie einen letzten Bewegungsabschnitt, während dessen das Unterwerkzeug 5 abgebremst wird (Bewegungsabschnitt VII).

Um das Unterwerkzeug 5 möglichst schnell von dem Blech 2 weg zu bewegen und zudem möglichst spät die Hinhubbewegung einleiten zu können, steuert die Steuereinheit 15 die Rückhub- und die Hinhubbewegung des Unterwerkzeugs 5 derart, dass der Hubantrieb 12 mit maximaler Leistung betrieben wird, d. h. das Unterwerkzeug 5 wird maximal möglich beschleunigt (Bewegungsabschnitte I und IV), mit maximal möglicher Geschwindigkeit bewegt (Bewegungsabschnitte II und VI) und maximal möglich abgebremst (Bewegungsabschnitte III und VII).

Die Steuereinheit 15 steuert die Hinhubbewegung des Unterwerkzeugs 5 in Abhängigkeit von dem relativen Rückhubfortschritt. Insbesondere leitet die Steuereinheit 15 die Hinhubbewegung des Unterwerkzeugs 5 in Abhängigkeit von dem relativen Rückhubfortschritt ein.

Zu diesem Zweck ermittelt die Auswerteeinheit 18 der Steuereinheit 15 den relativen Rückhubfortschritt bei einem Fortschritt der Rückhubbewegung, welcher mit Abschluss der maximal möglichen Rückhubbewegung erreicht wird, d. h. wenn der Rückhubfortschritt den vorbestimmten Wert von z = zₘₐₓ erreicht.

Aus dem so ermittelten relativen Rückhubfortschritt wird der sich zu diesem Zeitpunkt tatsächlich ergebende Fortschritt der Positionierbewegung (s = s₁) bestimmt. Die Hinhubbewegung wird durch die Steuereinheit 15 dann eingeleitet, wenn die Positionierbewegung einen von der Auswerteeinheit 18 berechneten Fortschritt von s = 1 - s₁ erreicht. Dabei wird angenommen, dass in dem vorliegenden Fall für die Hinhubbewegung der gleiche Betrag der normierten Verfahrstrecke erforderlich ist, wie für die Rückhubbewegung. Dadurch ist sichergestellt, dass die Hinhubbewegung nicht früher als nötig, aber auch nicht zu spät, eingeleitet wird.

Allgemein liegt den Berechnungen der Auswerteeinheit 18 die Erkenntnis zugrunde, dass die Verhältnisse bei der Rückhubbewegung den Verhältnissen bei der Hinhubbewegung entspreche, so dass - aus dem relativen Rückhubfortschritt in einfacher Weise Rückschlüsse auf den zu erwartenden relativen Hinhubfortschritt gezogen werden können.

In Figur 4 sind der Verlauf des relativen Rückhubfortschritts sowie der Verlauf des relativen Hinhubfortschritts im Falle einer "kurzen" Positionierbewegung gezeigt, bei welcher nur eine Rückhubbewegung ausgeführt werden kann, die kleiner ist als die maximal mögliche Rückhubbewegung. Beispielsweise stellt eine Positionierbewegung zwischen den Bearbeitungsstellen B und C gemäß Figur 1 eine "kurze" Positionierbewegung dar.

Generell, also auch bei Verhältnissen gemäß Figur 3, bestimmt die Auswerteeinheit 18 der Steuereinheit 15 den relativen Rückhubfortschritt bei einen vorbestimmten Fortschritt der Positionierbewegung von s = 0,25 und ermittelt daraus den sich zu diesem Zeitpunkt tatsächlich ergebenden Fortschritt der Rückhubbewegung. Ist der sich zu diesem Zeitpunkt ergebende Fortschritt der Rückhubbewegung gleich oder größer als die Hälfte des maximal möglichen Rückhubfortschritts (z(0,25) ≥ zₘₐₓ/2), erfolgt kein besonderes Eingreifen der Steuereinheit 15 während der Rückhubbewegung.

Im Falle der in Figur 4 dargestellten Positionierbewegung ist der so ermittelte Rückhubfortschritt aber kleiner als die Hälfte des maximal möglichen Rückhubfortschritts (z(0,25) < zₘₐₓ/2). Deswegen kann die maximal mögliche Rückhubbewegung bei einem Fortschritt der Positionierbewegung von s = 0,5 noch nicht abschlossen sein.

Anhand des in Figur 4 gestrichelt gezeichneten Verlaufs einer Bewegung des Unterwerkzeugs 5 wird deutlich, dass die maximal mögliche Rückhubbewegung (z = zₘₐₓ) erst bei einem Fortschritt der Positionierbewegung erreicht würde, der zwischen s = 0,5 und s= 0,75 liegt und welcher somit größer als s = 0,5 ist. Aus Figur 4 wird ebenfalls deutlich, dass ohne ein Eingreifen der Steuereinheit 15 eine bei z = zₘₐₓ eingeleitete Hinhubbewegung erst nach Abschluss der Positionierbewegung des Blechs 2 beendet wäre. Damit wäre eine Verzögerung der nachfolgenden Werkstückbearbeitung verbunden.

Um eine derartige Verzögerung zu vermeiden, sorgt die Steuereinheit 15 dafür, dass die Rückhubbewegung "vorzeitig" abgebremst wird, so dass die Rückhubbewegung spätestens bei Erreichen der Hälfte der Gesamtpositionierstrecke (s = 0,5) abgeschlossen ist. Der Fortschritt der Rückhubbewegung bei dieser neu definierten Endposition der Rückhubbewegung wird durch die Auswerteeinheit 18 als das Doppelte desjenigen Fortschritts der Rückhubbewegung bestimmt, der sich bei einem Fortschritt der Positionierbewegung von s = 0,25 einstellt. Die Hinhubbewegung des Unterwerkzeugs 5 wird dann ausgehend von der neu definierten Endposition der Rückhubbewegung ausgeführt.

Wie die Figuren 3 und 4 zeigen, wird die Hinhubbewegung mittels der Steuereinheit 15 in Abhängigkeit von dem relativen Rückhubfortschritt aus verschiedenen gegenüber dem Blech 2 in Hinhubrichtung eingenommenen Positionen des Unterwerkzeugs 5 eingeleitet. In beiden Fällen endet die Hinhubbewegung des Unterwerkzeugs 5 gleichzeitig mit der Positionierbewegung des Blechs 2.

Wie bereits vorstehend zu Figur 2 erläutert wurde, wird das Blech 2 unter Zusammenwirken der Bearbeitungswerkzeuge 4, 5 bearbeitet, wobei das Unterwerkzeug 5 während des Bearbeitungsvorgangs unbewegt in seiner Referenzposition angeordnet ist. Die Hinhubbewegungen und Rückhubbewegungen des Unterwerkzeugs 5 stellen demnach bei den bisher beschriebenen Abläufen reine Zustellbewegungen dar.

Abweichend davon kann das Unterwerkzeug 5 auch bei der Werkstückbearbeitung mit einer Hinhubbewegung bewegt werden. In diesem Fall wird das Unterwerkzeug 5 mittels des unteren Hubantriebs 12 über die Referenzposition hinaus zu dem Oberwerkzeug 4 hin (Hinhubbewegung) und anschließend von dem Oberwerkzeug 4 weg (Rückhubbewegung) verlagert.

Bei einer derartigen Werkstückbearbeitung, bei welcher das Unterwerkzeug 5 einen Arbeitshub und einen Arbeitsrückhub ausführt, und für den Fall, dass das Blech 2 während des Arbeitshubs und des Arbeitsrückhubs des Unterwerkzeugs 5 in der Positionierebene nicht bewegt wird (z. B. beim Stanzen), können auch nur diejenigen Anteile der gesamten Hinhubbewegung und der gesamten Rückhubbewegung, bei welchen das Unterwerkzeug 5 ausschließlich gegenüber dem Blech 2 zugestellt wird und bei welchen sich das Unterwerkzeug 5 nicht mit dem Blech 2 im Eingriff befindet, wie vorstehend beschrieben gesteuert werden. In diesem Fall werden von der gesamten Hinhubbewegung sowie von der gesamten Rückhubbewegung nur die genannten Zustellabschnitte der Hinhubbewegung und der Rückhubbewegung des Unterwerkzeugs 5 während der Positionierbewegung des Blechs 2 ausgeführt.

Im Übrigen ist es alternativ oder ergänzend zu den vorstehenden Abläufen auch möglich, dass das Oberwerkzeug 4 mit einer Rückhubbewegung und mit einer Hinhubbewegung bewegt wird, welche analog zu den geschilderten Rückhub- und Hinhubbewegungen des Unterwerkzeugs 5 gesteuert werden.

## Patentansprüche

1. Verfahren zum Bearbeiten, insbesondere zum Schneiden und/oder zum Umformen, von vorzugsweise plattenartigen Werkstücken, beispielsweise von Blechen, wobei' ein Werkstück (2) und ein Bearbeitungswerkzeug (5) relativ zueinander mit einer Positionierbewegung, einer Hinhubbewegung und einer Rückhubbewegung bewegt werden, wobei das Werkstück (2) und das Bearbeitungswerkzeug (5)
- bei der Positionierbewegung relativ zueinander in einer Positionierrichtung zugestellt werden,
- bei der Rückhubbewegung relativ zueinander in einer Rückhubrichtung quer zu der Positionierrichtung voneinander weg bewegt werden und
- bei der Hinhubbewegung relativ zueinander in einer Hinhubrichtung quer zu der Positionierrichtung zueinander hin bewegt werden,
und wobei die Rückhubbewegung und die Hinhubbewegung .während der Positionierbewegung ausgeführt werden,
**dadurch gekennzeichnet, dass**
der Fortschritt der Rückhubbewegung und der sich gleichzeitig ergebende Fortschritt der Positionierbewegung zueinander in Beziehung gesetzt werden und **dadurch** ein relativer Rückhubfortschritt ermittelt wird und dass die Hinhubbewegung in Abhängigkeit von dem relativen Rückhubfortschritt gesteuert wird.

2. Verfahren nach Anspruch 1, **dadurch gekennzeichnet, dass** die Rückhubbewegung frühestens gleichzeitig mit der Positionierbewegung eingeleitet wird.

3. Verfahren nach einem der vorhergehenden Ansprüche, **dadurch gekennzeichnet, dass** die Hinhubbewegung spätestens gleichzeitig mit der Positionierbewegung abgeschlossen ist.

4. Verfahren nach einem der vorhergehenden Ansprüche, **dadurch gekennzeichnet, dass** die Hinhubbewegung in Abhängigkeit von dem relativen Rückhubfortschritt eingeleitet wird.

5. Verfahren nach einem der vorhergehenden Ansprüche, **dadurch gekennzeichnet, dass** die Rückhubbewegung in Abhängigkeit von dem relativen Rückhubfortschritt gesteuert wird, vorzugsweise abgebremst wird.

6. Verfahren nach einem der vorhergehenden Ansprüche, **dadurch gekennzeichnet, dass** das Werkstück (2) und das Bearbeitungswerkzeug (5) bei der Positionierbewegung relativ zueinander über eine Gesamtpositionierstrecke (16) bewegt werden und dass die Rückhubbewegung derart gesteuert wird, dass sie spätestens bei Erreichen der Hälfte der Gesamtpositionierstrecke (16) der Positionierbewegung abgeschlossen ist.

7. Verfahren nach einem der vorhergehenden Ansprüche, **dadurch gekennzeichnet, dass** die Hinhubbewegung in Abhängigkeit von dem relativen Rückhubfortschritt aus verschiedenen in Hinhubrichtung eingenommenen Relativpositionen des Bearbeitungswerkzeugs und des Werkstücks (2) eingeleitet wird.

8. Verfahren nach einem der vorhergehenden Ansprüche, **dadurch gekennzeichnet, dass** das Werkstück (2) und das Bearbeitungswerkzeug (5) bei der Positionierbewegung relativ zueinander über eine Gesamtpositionierstrecke (16) bewegt werden und dass der Fortschritt der Positionierbewegung ermittelt wird in Form des bei der Ermittlung bereits zurückgelegten Anteils an der Gesamtpositionierstrecke (16) der Positionierbewegung.

9. Verfahren nach einem der vorhergehenden Ansprüche, **dadurch gekennzeichnet, dass** zur Ermittlung des relativen Rückhubfortschritts der Fortschritt der Rückhubbewegung und der sich gleichzeitig ergebende Fortschritt der Positionierbewegung bei wenigstens einem vorbestimmten Fortschritt der Positionierbewegung und/oder bei wenigstens einem vorbestimmten Fortschritt der Rückhubbewegung zueinander in Beziehung gesetzt werden.

10. Verfahren nach einem der vorhergehenden Ansprüche, **dadurch gekennzeichnet, dass** ein vorbestimmter Fortschritt der Rückhubbewegung, bei welchem zur Ermittlung des relativen Rückhubfortschritts der Fortschritt der Rückhubbewegung und der sich gleichzeitig ergebende Fortschritt der Positionierbewegung zueinander in Beziehung gesetzt werden, mit Abschluss der maximal möglichen Rückhubbewegung erreicht wird.

11. Verfahren nach einem der vorhergehenden Ansprüche, **dadurch gekennzeichnet, dass** ein vorbestimmter Fortschritt der Positionierbewegung, bei welchem zur Ermittlung des relativen Rückhubfortschritts der Fortschritt der Rückhubbewegung und der sich gleichzeitig ergebende Fortschritt der Positionierbewegung zueinander in Beziehung gesetzt werden, erreicht wird, wenn ein Viertel der Gesamtpositionierstrecke der Positionierbewegung zurückgelegt ist.

12. Verfahren nach einem der vorhergehenden Ansprüche, **dadurch gekennzeichnet, dass** aus dem ermittelten relativen Rückhubfortschritt derjenige Fortschritt der Positionierbewegung ermittelt wird, bei welchem ein vorbestimmter Fortschritt der Rückhubbewegung tatsächlich erreicht wird, und dass in Abhängigkeit von dem so ermittelten Fortschritt der Positionierbewegung die Hinhubbewegung gesteuert wird.

13. Verfahren nach einem der vorhergehenden Ansprüche, **dadurch gekennzeichnet, dass** die Hinhubbewegung in Abhängigkeit von einem auf Grundlage des relativen Rückhubfortschritts ermittelten Fortschritts der Positionierbewegung gesteuert wird, indem anhand des ermittelten Fortschritts der Positionierbewegung ein Fortschritt der Positionierbewegung bestimmt wird, bei dessen Erreichen die Hinhubbewegung eingeleitet wird.

14. Verfahren nach einem der vorhergehenden Ansprüche, **dadurch gekennzeichnet, dass** aus dem ermittelten relativen Rückhubfortschritt ein Fortschritt der Rückhubbewegung ermittelt wird, bei dem ein vorbestimmter Fortschritt der Positionierbewegung tatsächlich erreicht wird, und dass in Abhängigkeit von dem so ermittelten Fortschritt der Rückhubbewegung die Rückhubbewegung gesteuert wird.

15. Verfahren nach einem der vorhergehenden Ansprüche, **dadurch gekennzeichnet, dass** bei der Rückhubbewegung und bei der Hinhubbewegung das Bearbeitungswerkzeug (5) bewegt wird.

16. Verfahren nach einem der vorhergehenden Ansprüche, **dadurch gekennzeichnet, dass** nach der Hinhubbewegung und/oder vor der Rückhubbewegung eines ersten Bearbeitungswerkzeugs (5) eine Werkstückbearbeitung erfolgt, bei welcher ein weiteres Bearbeitungswerkzeug (4) zu dem ersten Bearbeitungswerkzeug (5) hin bewegt wird und **dadurch** die beiden Bearbeitungswerkzeuge (4, 5) auf ein zwischen ihnen angeordnetes Werkstück (2) einwirken.

17. Werkzeugmaschine zum Bearbeiten, insbesondere zum Schneiden und/oder zum Umformen, von vorzugsweise plattenartigen Werkstücken, beispielsweise von Blechen,
- mit einem Bearbeitungswerkzeug (5),
- mit einer Positioniereinrichtung (3), mittels derer ein Werkstück (2) und das Bearbeitungswerkzeug (5) in einer Positionierrichtung mit einer Positionierbewegung relativ zueinander zugestellt werden,
- mit einem Hubantrieb (12), mittels dessen das Bearbeitungswerkzeug (5) und das Werkstück (2) quer zu der Positionierrichtung mit einer Hinhubbewegung zueinander hin und mit einer Rückhubbewegung voneinander weg bewegt werden, und
- mit einer Steuereinrichtung (15), mittels derer die Positioniereinrichtung (3) und der Hubantrieb (12) derart gesteuert werden, dass eine Hinhubbewegung und eine Rückhubbewegung während einer Positionierbewegung ausgeführt werden,
**dadurch gekennzeichnet, dass**
die Steuereinrichtung (15) eine Auswerteeinheit (18) aufweist, welche den Fortschritt der Rückhubbewegung und den sich gleichzeitig ergebenden Fortschritt der Positionierbewegung zueinander in Beziehung setzt und **dadurch** einen relativen Rückhubfortschritt ermittelt und welche für die Steuereinrichtung (15) Vorgaben definiert, gemäß derer hierfür vorgesehene Mittel der Steuereinrichtung (15) die Hinhubbewegung in Abhängigkeit von dem relativen Rückhubfortschritt steuern.

## Claims

1. A method for processing, especially for cutting and/or for forming, preferably plate-like workpieces, for example metal sheets, wherein a workpiece (2) and a processing tool (5) are moved relative to each other with a positioning movement, an outward-stroke movement and a return-stroke movement, wherein the workpiece (2) and the processing tool (5)
- are positioned relative to each other in a positioning direction in the positioning movement,
- are moved relative to each other and away from each other in a return-stroke direction transverse to the positioning direction in the return-stroke movement and
- are moved relative to each other and towards each other in an outward-stroke direction transverse to the positioning direction in the outward-stroke movement,
and wherein the return-stroke movement and the outward-stroke movement are executed during the positioning movement,
**characterised in that**
the progress of the return-stroke movement and the simultaneously obtained progress of the positioning movement are set in relation to each other and **in that** manner a relative return-stroke progress is ascertained, and the outward-stroke movement is controlled as a function of the relative return-stroke progress.

2. A method according to claim 1, **characterised in that** the return-stroke movement is initiated at the earliest simultaneously with the positioning movement.

3. A method according to one of the preceding claims, **characterised in that** the outward-stroke movement is completed at the latest simultaneously with the positioning movement.

4. A method according to any one of the preceding claims, **characterised in that** the outward-stroke movement is initiated as a function of the relative return-stroke progress.

5. A method according to any one of the preceding claims, **characterised in that** the return-stroke movement is controlled, preferably decelerated, as a function of the relative return-stroke progress.

6. A method according to any one of the preceding claims, **characterised in that** the workpiece (2) and the processing tool (5) are moved in the positioning movement relative to each other over a total positioning distance (16), and the return-stroke movement is controlled in such a manner that it is completed at the latest when half the total positioning distance (16) of the positioning movement has been reached.

7. A method according to any one of the preceding claims, **characterised in that** the outward-stroke movement is initiated as a function of the relative return-stroke progress from various relative positions of the workpiece (2) and the processing tool assumed in the outward-stroke direction.

8. A method according to any one of the preceding claims, **characterised in that** the workpiece (2) and the processing tool (5) are moved in the positioning movement relative to each over a total positioning distance (16), and the progress of the positioning movement is ascertained in the form of the proportion of the total positioning distance (16) of the positioning movement already travelled when the ascertainment takes place.

9. A method according to any one of the preceding claims, **characterised in that**, to ascertain the relative return-stroke progress, the progress of the return-stroke movement and the simultaneously obtained progress of the positioning movement at at least one predetermined progress of the positioning movement and/or at at least one predetermined progress of the return-stroke movement are set in relation to each other.

10. A method according to any one of the preceding claims, **characterised in that** a predetermined progress of the return-stroke movement at which the progress of the return-stroke movement and the simultaneously obtained progress of the positioning movement are set in relation to each other to ascertain the relative return-stroke progress is reached with the completion of the maximum possible return-stroke movement.

11. A method according to any one of the preceding claims, **characterised in that** a predetermined progress of the positioning movement at which the progress of the return-stroke movement and the simultaneously obtained progress of the positioning movement are set in relation to each other to ascertain the relative return-stroke progress is reached when a quarter of the total positioning distance of the positioning movement has been travelled.

12. A method according to any one of the preceding claims, **characterised in that**, from the relative return-stroke progress ascertained, that progress of the positioning movement at which a predetermined progress of the return-stroke movement is actually reached is ascertained, and the outward-stroke movement is controlled as a function of the progress of the positioning movement so ascertained.

13. A method according to any one of the preceding claims, **characterised in that** the outward-stroke movement is controlled as a function of a progress of the positioning movement ascertained on the basis of the relative return-stroke progress by determining on the basis of the ascertained progress of the positioning movement a progress of the positioning movement at the reaching of which the outward-stroke movement is initiated.

14. A method according to any one of the preceding claims, **characterised in that**, from the relative return-stroke progress ascertained, a progress of the return-stroke movement at which a predetermined progress of the positioning movement is actually reached is ascertained, and the return-stroke movement is controlled as a function of the progress of the return-stroke movement so ascertained.

15. A method according to any one of the preceding claims, **characterised in that** the processing tool (5) is moved in the return-stroke movement and in the outward-stroke movement.

16. A method according to any one of the preceding claims, **characterised in that** after the outward-stroke movement and/or before the return-stroke movement of a first processing tool (5) a workpiece processing operation takes place in which a further processing tool (4) is moved towards the first processing tool (5) and the two processing tools (4, 5) thereby act on a workpiece (2) arranged between them.

17. A machine tool for processing, especially for cutting and/or for forming, preferably plate-like workpieces, for example metal sheets,
- having a processing tool (5),
- having a positioning device (3) by means of which a workpiece (2) and the processing tool (5) are positioned relative to each other in a positioning direction with a positioning movement,
- having a stroke drive (12) by means of which the processing tool (5) and the workpiece (2) are moved transversely to the positioning direction and towards each other with an outward-stroke movement and away from each other with a return-stroke movement, and
- having a control device (15) by means of which the positioning device (3) and the stroke drive (12) are controlled in such a manner that an outward-stroke movement and a return-stroke movement are executed during a positioning movement,
**characterised in that**
the control device (15) has an evaluation unit (18) which sets the progress of the return-stroke movement and the simultaneously obtained progress of the positioning movement in relation to each other and **in that** manner ascertains a relative return-stroke progress and which defines parameters for the control device (15), in accordance with which parameters means of the control device (15) provided therefor control the outward-stroke movement as a function of the relative return-stroke progress.

## Revendications

1. Procédé pour l'usinage, notamment pour la découpe et/ou la mise en forme de pièces à usiner revêtant, de préférence, la forme de plaques, telles que des tôles par exemple, une pièce (2) et un outil d'usinage (5) étant mutuellement animés d'un mouvement de positionnement, d'un mouvement d'avance et d'un mouvement de recul, sachant que ladite pièce (2) et ledit outil d'usinage (5)
- sont positionnés l'un à l'autre dans une direction de positionnement au cours du mouvement de positionnement,
- sont éloignés l'un de l'autre, au cours du mouvement de recul, dans une direction de recul transversale vis-à-vis de la direction de positionnement, et
- sont rapprochés l'un de l'autre, au cours du mouvement d'avance, dans une direction d'avance transversale vis-à-vis de la direction de positionnement,
et sachant que le mouvement de recul et le mouvement d'avance sont exécutés au cours du mouvement de positionnement,
**caractérisé par le fait que**
la progression du mouvement de recul, et la progression du mouvement de positionnement obtenue simultanément, sont mises en relation l'une par rapport à l'autre, une progression du recul relatif étant ainsi déterminée ; et **par le fait que** le mouvement d'avance est commandé en fonction de ladite progression du recul relatif.

2. Procédé selon la revendication 1, **caractérisé par le fait que** le mouvement de recul est amorcé, au plus tôt, en simultanéité avec le mouvement de positionnement.

3. Procédé selon l'une des revendications précédentes, **caractérisé par le fait que** le mouvement d'avance est achevé, au plus tard, en simultanéité avec le mouvement de positionnement.

4. Procédé selon l'une des revendications précédentes, **caractérisé par le fait que** le mouvement d'avance est amorcé en fonction de la progression du recul relatif.

5. Procédé selon l'une des revendications précédentes, **caractérisé par le fait que** le mouvement de recul est commandé, de préférence freiné en fonction de la progression du recul relatif.

6. Procédé selon l'une des revendications précédentes, **caractérisé par le fait que** la pièce (2) et l'outil d'usinage (5) sont mus l'un par rapport à l'autre, au cours du mouvement de positionnement, le long d'un trajet de positionnement global (16) ; et **par le fait que** le mouvement de recul est commandé de façon telle qu'il soit achevé, au plus tard, lorsqu'est atteinte la moitié dudit trajet de positionnement global (16) dudit mouvement de positionnement.

7. Procédé selon l'une des revendications précédentes, **caractérisé par le fait que** le mouvement d'avance est amorcé en fonction de la progression du recul relatif, sur la base de différentes positions relatives prises par l'outil d'usinage et par la pièce (2) dans la direction d'avance.

8. Procédé selon l'une des revendications précédentes, **caractérisé par le fait que** la pièce (2) et l'outil d'usinage (5) sont mus l'un par rapport à l'autre, au cours du mouvement de positionnement, le long d'un trajet de positionnement global (16) ; et **par le fait que** la progression du mouvement de positionnement est déterminée sous la forme de la part du trajet de positionnement global (16) dudit mouvement de positionnement qui est déjà parcourue au stade de la détermination.

9. Procédé selon l'une des revendications précédentes, **caractérisé par le fait que**, en vue de déterminer la progression du recul relatif, la progression du mouvement de recul et la progression du mouvement de positionnement, obtenue simultanément, sont mises en relation l'une par rapport à l'autre en présence d'au moins une progression prédéterminée dudit mouvement de positionnement et/ou en présence d'au moins une progression prédéterminée dudit mouvement de recul.

10. Procédé selon l'une des revendications précédentes, **caractérisé par le fait qu'**une progression prédéterminée du mouvement de recul en présence de laquelle, en vue de déterminer la progression du recul relatif, une relation mutuelle est établie entre la progression du mouvement de recul et la progression du mouvement de positionnement obtenue simultanément, est atteinte à l'achèvement du mouvement de recul possible au maximum.

11. Procédé selon l'une des revendications précédentes, **caractérisé par le fait qu'**une progression prédéterminée du mouvement de positionnement en présence de laquelle, en vue de déterminer la progression du recul relatif une relation mutuelle est établie entre la progression du mouvement de recul et la progression du mouvement de positionnement obtenue simultanément, est atteinte lorsqu'un quart du trajet de positionnement global dudit mouvement de positionnement est parcouru.

12. Procédé selon l'une des revendications précédentes, **caractérisé par le fait que**, sur la base de la progression du recul relatif déterminée, l'on détermine la progression du mouvement de positionnement en présence de laquelle une progression prédéterminée du mouvement de recul est effectivement atteinte ; et **par le fait que** le mouvement d'avance est commandé en fonction de la progression du mouvement de positionnement ainsi déterminée.

13. Procédé selon l'une des revendications précédentes, **caractérisé par le fait que** le mouvement d'avance est commandé en fonction d'une progression du mouvement de positionnement déterminée sur la base de la progression du recul relatif en déterminant, à l'aide de la progression déterminée du mouvement de positionnement, une progression dudit mouvement de positionnement qui, lorsqu'elle est atteinte, marque l'amorce du mouvement d'avance.

14. Procédé selon l'une des revendications précédentes, **caractérisé par le fait que**, sur la base de la progression du recul relatif déterminée, l'on détermine une progression du mouvement de recul en présence de laquelle une progression prédéterminée du mouvement de positionnement est effectivement atteinte ; et **par le fait que** le mouvement de recul est commandé en fonction de la progression du mouvement de recul ainsi déterminée.

15. Procédé selon l'une des revendications précédentes, **caractérisé par le fait que** l'outil d'usinage (5) est mû lors du mouvement de recul et lors du mouvement d'avance.

16. Procédé selon l'une des revendications précédentes, **caractérisé par le fait qu'**il s'opère, après le mouvement d'avance et/ou avant le mouvement de recul d'un premier outil d'usinage (5), un usinage de pièce au cours duquel un autre outil d'usinage (4) est mû en direction dudit premier outil d'usinage (5), et les deux outils d'usinage (4, 5) agissent ainsi sur une pièce (2) disposée entre eux.

17. Machine-outil pour l'usinage, notamment pour la découpe et/ou la mise en forme de pièces à usiner revêtant, de préférence, la forme de plaques, telles que des tôles par exemple, comprenant
- un outil d'usinage (5),
- un dispositif de positionnement (3) au moyen duquel une pièce (2) et ledit outil d'usinage (5) sont positionnés l'un à l'autre en un mouvement de positionnement, dans une direction de positionnement,
- un entraînement en translation (12), au moyen duquel ledit outil d'usinage (5) et ladite pièce (2) sont rapprochés l'un de l'autre en un mouvement d'avance et éloignés l'un de l'autre en un mouvement de recul, transversalement vis-à-vis de la direction de positionnement, et
- un dispositif de commande (15), au moyen duquel ledit dispositif de positionnement (3) et ledit entraînement en translation (12) sont commandés de telle sorte qu'un mouvement d'avance et un mouvement de recul soient effectués au cours d'un mouvement de positionnement,
**caractérisée par le fait que**
le dispositif de commande (15) présente une unité d'interprétation (18) qui établit une relation mutuelle entre la progression du mouvement de recul et la progression du mouvement de positionnement obtenue simultanément, en déterminant ainsi une progression du recul relatif; et qui instaure, pour ledit dispositif de commande (15), des données préétablies selon lesquelles des moyens dudit dispositif de commande (15), prévus à cette fin, commandent le mouvement d'avance en fonction de ladite progression du recul relatif.
